# EUROPEAN PATENT APPLICATION

(11) **EP 3 712 816 A1**
(43) Date of publication of application: **23.09.2020**
(21) Application number: 18879107.3
(22) Date of filing: 09.11.2018
(51) Int. Cl.: G06K 19/07, G06K 19/077, H01Q 1/38, H01Q 7/00, H01Q 9/16

(54) **IC TAG**

(30) Priority: 14.11.2017 JP 2017219473
(71) Applicant: NOK Corporation, Tokyo 105-8585 (JP)
(72) Inventor: NAKANO, Tomoko, Fujisawa-shi, Kanagawa 251-0042 (JP); YAMADA, Takeshi, Fujisawa-shi, Kanagawa 251-0042 (JP)
(74) Representative: TBK
(86) International application number: PCT/JP2018/041583
(87) International publication number: WO 2019/098123

(57) **Abstract**

Provided is an IC tag that can adjust the resonant frequency to be within a predetermined range, according to the permittivity of an object to which the IC tag is to be attached, without changing the design of an antenna. The IC tag includes: an IC tag main body (10) having an IC chip and an antenna (102) electrically connected to the IC chip; and at least one resonant frequency adjuster (12) that is stacked as a layer on the IC tag main body (10) and adjusts the resonant frequency of the antenna (102) to be within a predetermined range.

## Description

### Technical Field

The present invention relates to an IC tag, and, for example, relates to an IC tag that can adjust a resonant frequency to be within a predetermined range, according to the permittivity of an object to which the IC tag is to be attached, without changing the design of an antenna.

### Background Art

RFID tags, IC cards, RFID cards, etc. have been used as IC tags. Information related to products are written on IC tags, and the IC tags are used to identify the products, manage the products and prevent forgery of the products. When managing, selling or using the products, the IC tags are used to identify the products, manage the products and prevent forgery of the products by wirelessly reading the written information with a reader or a reader/writer.

As an IC tag, there has been proposed an RFID tag in which an antenna showing a resonant frequency corresponding to a frequency band to be used by a reader or a reader/writer is mounted (see, for example, Patent Literature 1). There has also been proposed a sheet material for improving communication, which improves the communication state for an IC tag at a predetermined resonant frequency by using a sheet for improving communication.

### Document List

### Patent Literatures

Patent Literature 1: Japanese Patent Application Publication No. 2013-80324
Patent Literature 2: Japanese Patent Application Publication No. 2007-143132

### Summary of Invention

### Technical Problem

An antenna of an IC tag is usually designed by considering wavelengths such as 1/2 wavelength. However, the antenna of the IC tag has a problem that, when the antenna is surrounded by a dielectric having a relative permittivity greater than 1, the wavelength is shortened and the resonant frequency of the antenna is decreased.

Considering such a fact, for an IC tag, an antenna is usually designed by taking into account the decrease in the resonant frequency, according to use environments such as the permittivity of an object to which the IC tag is to be attached. However, the design of the antenna of the IC tag was required to be changed according to the material to which the IC tag is to be attached.

In this case, there is a problem that the user needs to find the permittivity of the material to which the IC tag is to be attached, and design the antenna of the IC tag.

Furthermore, although the sheet for improving communication described in Patent Literature 2 can improve the communication state for the IC tag at a predetermined resonant frequency, but the resonant frequency itself can not be adjusted according to the matter to which the IC tag is to be attached.

Therefore, it is an objective of the present invention to provide an IC tag that can adjust the resonant frequency to be within a predetermined range, according to the permittivity of an object to which the IC tag is to be attached, without changing the design of an antenna.

Another objective of the present invention will be apparent from the following description.

### Solution to Problem

An IC tag according to the present invention is characterized by including: an IC tag main body having an IC chip and an antenna electrically connected to the IC chip; and a plurality of resonant frequency adjusters that are stacked in layers on the IC tag main body and adjust the resonant frequency of the antenna to be within a predetermined range.

In the IC tag according to the present invention, each of the resonant frequency adjusters preferably has a dielectric layer.

In the IC tag according to the present invention, each of the resonant frequency adjusters preferably has, on one surface or both surfaces of the dielectric layer, an adhesive material layer containing an adhesive material for detachably fixing the dielectric layer to the IC tag main body or to an adjacent dielectric layer.

In the IC tag according to the present invention, each of the resonant frequency adjusters preferably has the dielectric layer stacked under the IC tag main body via the adhesive material layer.

The IC tag according to the present invention is preferably configured to be able to change the resonant frequency by increasing or decreasing the number of the resonant frequency adjusters.

### Effects of Invention

According to the present invention, it is possible to provide an IC tag that can adjust the resonant frequency to be within a predetermined range, according to the permittivity of an object to which the IC tag is to be attached, without changing the design of an antenna.

### Brief Description of Drawings

[Fig. 1] A view illustrating an example of an IC tag according to the present invention.
[Fig. 2A] A conceptual explanatory view showing an example of a method of connecting a magnetic field type tag unit and an antenna.
[Fig. 2B] A conceptual explanatory view showing an example of a method of connecting a wire type tag unit and an antenna.
[Fig. 3] A schematic enlarged cross-sectional view showing an example of the magnetic field type tag unit.
[Fig. 4A] An explanatory plan view showing an example of an IC tag.
[Fig. 4B] An enlarged cross-sectional view taken along the (IV)-(IV) line in Fig. 4A.
[Fig. 5] A view showing results of an example.

### Description of Embodiments

Hereinafter, an embodiment of the present invention will be described in detail with reference to the attached drawings. However, dimensions, materials, shapes, relative arrangements and so on of components described in the following embodiment are not intended to limit the scope of the invention unless otherwise specified.

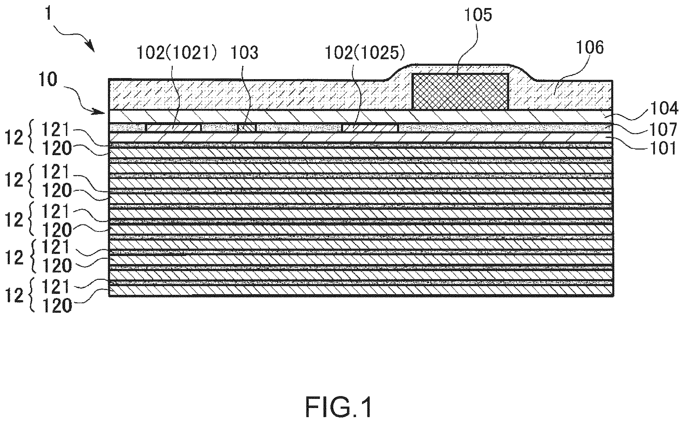

Fig. 1 is a view illustrating an example of an IC tag according to the present embodiment. As shown in Fig. 1, an IC tag 1 according to the present embodiment includes an IC tag main body 10 having a later-described IC chip and an antenna electrically connected to the IC chip, and a plurality of resonant frequency adjusters 12 that are stacked in layers on the IC tag main body 10 and adjust the resonant frequency of the antenna to be within a predetermined range. The resonant frequency adjusters 12 will be described later.

The IC tag main body 10 includes a base film 101 made of flexible resin, an antenna 102 and a communication enhancer 103 arranged on the base film 101, a cover film 104 arranged on the antenna 102 and the communication enhancer 103, a tag unit 105 arranged on the cover film 104, and a covering part 106 provided to cover the cover film 104 and the tag unit 105. The communication enhancer 103 is arranged adjacent to a second linear portion 1023 that is the tip side of the antenna 102. The cover film 104 is firmly fixed to the antenna 102 and the communication enhancer 103 arranged on the base film 101. The base film 101 and the cover film 104 are firmly fixed together, for example, through an adhesive layer 107.

As the base film 101, for example, a film that is generally called a flexible printed board is used. As the cover film 104, for example, a film made of flexible resin is used. As the materials of the base film 101 and the cover film 104, for example, polyimide (PI), polyethylene terephthalate (PET), polyether nitrile (PEN), and the like are used.

The adhesive layer 107 contains an adhesive. As the adhesive layer 107, for example, an adhesive sheet is used. When the base film 101 and the cover film 104 are resin films having high heat resistance, a thermosetting adhesive is used as the adhesive layer 107.

The material of the covering part 106 is not particularly limited. Rubber (elastic material), such as silicone rubber, fluorine rubber, nitrile rubber, butyl rubber and EPDM, is used as the material of the covering part 106. In the case where rubber is used for the covering part 106, it is possible to increase the adhesiveness between the cover film 104 and the covering part 106 by using polyimide (PI) or the like having excellent adhesiveness with respect to rubber for the material of the cover film 104.

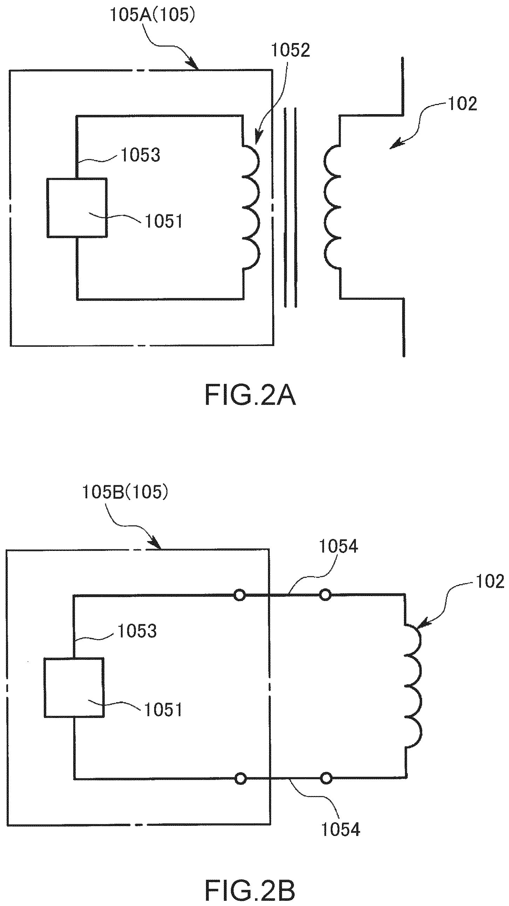

A method of connecting the tag unit 105 and the antenna 102 will be described with reference to Figs. 2A, 2B. Fig. 2A is a conceptual explanatory view showing an example of a method of connecting a magnetic field type tag unit and an antenna. Fig. 2B is a conceptual explanatory view showing an example of a method of connecting a wire type tag unit and an antenna. As the tag unit 105, for example, a magnetic field type tag unit 105A and a wire type tag unit 105B are used.

In Fig. 2A, an example in which the magnetic field type tag unit 105A is used as the tag unit 105 is shown. The magnetic field type tag unit 105A includes an IC chip 1051 and a coil part 1052 arranged inside the magnetic field type tag unit 105A (see the alternate long and short dash line in Fig. 2A). The IC chip 1051 and the coil part 1052 are electrically connected through a conductor 1053. In the magnetic field type tag unit 105A, the IC chip 1051 and the coil part 1052 are electrically connected with the conductor 1053. The antenna 102 is electrically connected to the IC chip 1051 of the magnetic field type tag unit 105A by electromagnetic coupling between the coil part 1052 and the antenna 102 through the coil part 1052. In the magnetic field type tag unit 105A, by adjusting the positional relationship between the coil part 1052 and the antenna 102, the electromagnetic coupling between the coil part 1052 and the antenna 102 enables communication.

As another embodiment, in Fig. 2B, an example using the wire type tag unit 105B as the tag unit 105 is shown. The magnetic field type tag unit 105B includes the IC chip 1051 arranged inside the magnetic field type tag unit 105B (see the alternate long and short dash line in Fig. 2B). In the wire type tag unit 105B, the IC chip 1051 and the antenna 102 are directly electrically connected with the conductor 1053 and a wire 1054 having conductivity. In the wire type tag unit 105B, the IC chip 1051 and the conductor 1053 are connected, and the conductor 1053 and the wire 1054 are connected. The wire 1054 is directly electrically connected to the external antenna 102 of the wire type tag unit 105B. The antenna 102 is directly electrically connected to the conductor 1053 and the IC chip 1051 of the wire type tag unit 105B through the wire 1054.

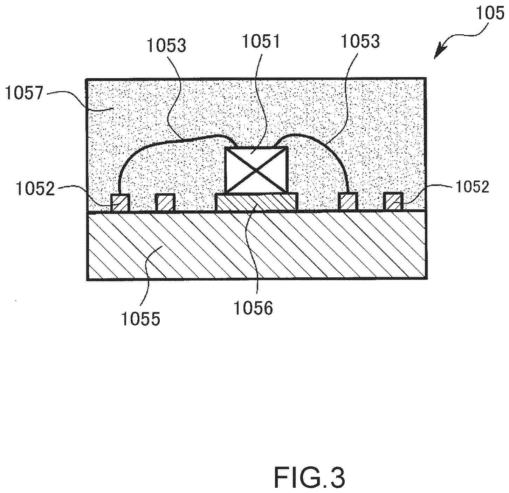

An example of the configuration of the magnetic field type tag unit 105A will be described with reference to Fig. 3. Fig. 3 is a schematic enlarged cross-sectional view of the magnetic field type tag unit 3. In the magnetic field type tag unit 105A, the IC chip 1051 is fixed on a die pad 1056 formed on a substrate 1055. The coil part 1052 is arranged to surround the periphery of the IC chip 1051. The IC chip 1051 and the coil part 1052 are electrically connected with the conductor 1053. The IC chip 1051, the die pad 1056, the coil part 1052, and the conductor 1053 are embedded in a hard resin material 1057, such as epoxy.

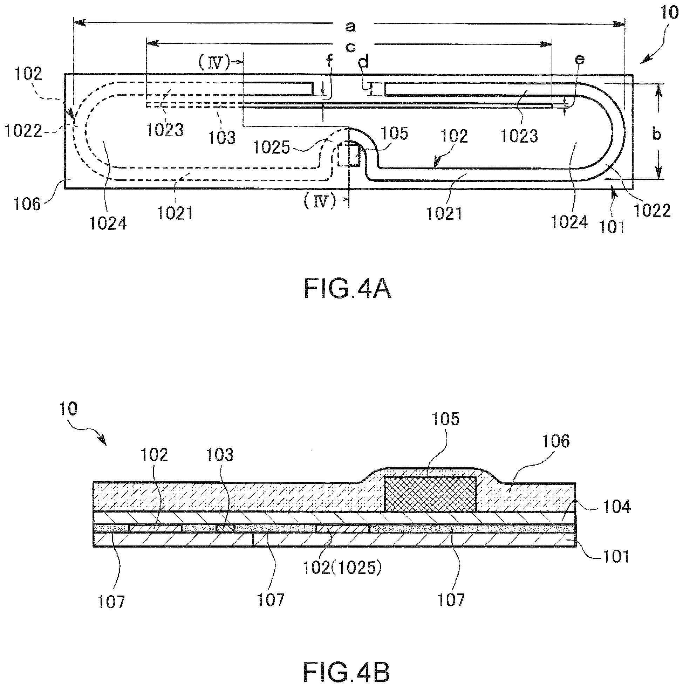

Next, an example of the configuration of the antenna 102 will be described. Fig. 4A is a plan view in which the covering part is removed on the right side of the (IV)-(IV) line. Fig. 4B is an enlarged cross-sectional view taken along the (IV)-(IV) line in Fig. 4A. For example, the antenna 102 is composed of a metal, such as copper, formed on the base film 101 as shown in Figs. 4A, 4B. The antenna 102 includes first linear portions 1021, 1021, bent portions 1022, 1022 extending from both sides of the first linear portions 1021, 1021, and a pair of second linear portions 1023, 1023 extending from both the bent portions 1022, 1022, respectively, and having tips opposing each other. The first linear portions 1021,1021 and the second linear portions 1023, 1023 are arranged in parallel with each other. The tips extended from the respective second linear portions 1023, 1023 are disposed with a space between the tips so as not to contact each other. In the example shown in Fig. 2A, the bent portion 1023 is formed in an arc shape, but is not limited to this, and may be formed, for example, in a U-shape.

Bent space portions 1024, 1024 are formed in spaces surrounded by both the bent portions 1022, 1022, the first linear portions 1021, 1021, and the second linear portions 1023,1023, respectively.

In the vicinity of the center of the first linear portions 1021, 1021 of the antenna 102, a protruding portion 1025 protruding toward the second linear portions 1023, 1023 is formed. As shown in Fig. 4A, in the present embodiment, the protruding portion 1025 is arranged to be curved in an arc shape. When the tag unit 105 is the magnetic field type tag unit 105A, it is preferable to provide the protruding portion 1025. By disposing the magnetic field type tag unit 105 inside the protruding portion 1025, the antenna 102 can be in close proximity to the magnetic field type tag unit 105A over a long distance, and thus it is possible to extend the communication distance.

Next, the resonant frequency adjuster 12 will be described with reference to Fig. 1. As shown in Fig. 1, a plurality of resonant frequency adjusters 12 are stacked in layers under the IC tag main body 10. Each of the resonant frequency adjusters 12 is in the form of a sheet, and has a dielectric layer 120 for adjusting the resonant frequency of the antenna 102, and an adhesive material layer 121 arranged on the dielectric layer 120. The adhesive material layer 121 contains an adhesive material for detachably fixing the dielectric layer 120 to another dielectric layer 120 or to the base film 101. The adhesive material layer 120 is arranged between the base film 101 and the dielectric layer 120 and between adjacent resonant frequency adjusters 12. The adhesive material layer 121 detachably fixes the resonant frequency adjustor 12 between adjacent base film 101 and dielectric layer 120 and between adjacent dielectric layers 120. In the IC tag 1, a plurality of resonant frequency adjusters 12, each having the dielectric layer 120 and the adhesive material layer 121, are stacked in layers on one surface of the IC tag main body 10. The resonant frequency adjusters 12 are configured to be able to change the resonant frequency of the antenna 102 by increasing or decreasing the number of the layers.

That is, in the IC tag 1, a plurality of resonant frequency adjusters 12 are stacked in layers under the IC tag main body 10 by attaching the dielectric layers 121 via the adhesive layers 120. In the example shown in Fig. 1, the adhesive material layer 121, the dielectric layer 120, the adhesive material layer 121, ... and the dielectric layer 120 are arranged in this order from the IC tag main body 10 side. The aspect shown in Fig. 1 is an aspect including a plurality of resonant frequency adjusters 12, each having the dielectric layer 120 under the adhesive material layer 121. That is, in the IC tag 1, the adhesive material layer is formed on one surface of the lowest dielectric layer 120 relative to the IC tag main body 10, and the adhesive layers 121 are formed on both surfaces of other dielectric layers 120. In the example shown in Fig. 1, an example in which the resonant frequency adjusters 12 are arranged under the IC tag main body 10 is described, but the IC tag 1 is not limited to this configuration. In the IC tag 1, the resonant frequency adjusters 12 may be arranged above the IC tag main body 10, or the resonant frequency adjusters 12 may be arranged above and under the IC tag main body 10, respectively.

The dielectric layer 120 is formed of a dielectric in the shape of a sheet. The dielectric is not particularly limited, and examples include resins and rubber, specifically, resin films. The relative permittivity of the dielectric just needs to be greater than 1, and, for example, the relative permittivity is 2 to 5. The thickness of the dielectric layer 120 is, for example, 0.01 mm to 1 mm.

In the example shown in Fig. 1, the adhesive material layer 121 of the resonant frequency adjuster 12 is formed on one surface of the dielectric layer 120 described above. Another dielectric layer 120 is stacked on one surface of the dielectric layer 120 via the adhesive material layer 121. Thus, a plurality of resonant frequency adjusters 12 are stacked in layers, and the dielectric layer 120 is formed on the most distant side in a lower direction from the IC tag main body 10 (the lower side in Fig. 1). That is, the adhesive layers 121 are formed on one surface or both surfaces of the dielectric layers 120.

The adhesive material layer 121 contains an adhesive material. The adhesive material is not particularly limited, and anything having an adhesive property and publicly known adhesive material can be used. For example, gels can also be used as the adhesive material. The thickness of the adhesive material layer 121 is, for example, 0.01 mm to 0.5 mm. As the adhesive material of the adhesive material layer 121, it is preferable to select an adhesive material that is easily removable.

The resonant frequency adjusters 12 can be peeled off from each other. The resonant frequency adjuster 12 disposed on the IC tag main body 10 side can also be peeled off from the IC tag main body 10. Thus, some or all of the resonant frequency adjusters 12 can be peeled off from the IC tag main body 10.

In the IC tag 1, by peeling off, one by one, the plurality of resonant frequency adjusters 12 stacked in layers on the IC tag main body 10, the number of the resonant frequency adjusters 12 affecting the resonant frequency is reduced, and therefore it is possible to decrease the resonant frequency. Similarly, since the number of the resonant frequency adjusters 12 is increased by adding the resonant frequency adjusters one by one, it is possible to increase the resonant frequency.

That is, the IC tag 1 is configured to be able to change the resonant frequency by increasing or decreasing the number of the resonant frequency adjusters 12.

Hence, the IC tag 1 can change the number of layers of the resonant frequency adjusters 12 attached to the IC tag main body 10, according to a desired frequency band to be used. For example, for 920 MHz (UHF band), by arranging the number of the resonant frequency adjusters 12 to a predetermined number of layers, it is possible to match the resonant frequency to the UHF band that is the desired frequency band to be used.

When the IC tag 1 is used by being attached to an object having a low permittivity (such as, for example, a Styrofoam box) at the time of use, the object has a small influence on the resonant frequency of the IC tag 1. Therefore, the IC tag 1 can be used without peeling off the resonant frequency adjusters 12 from the IC tag main body 10.

On the other hand, when the IC tag 1 is used by being attached to an object having a high permittivity, the object has a large influence on the resonant frequency, and therefore the IC tag 1 is used after peeling off the resonant frequency adjuster 12 from the IC tag main body 10. The resonant frequency of the IC tag 1 shifts to a higher side in accordance with the number of the resonant frequency adjusters 12 to be peeled off. That is, as the number of layers of the resonant frequency adjusters 12 decreases, the number of dielectric layers 120 constituting the resonant frequency adjusters 12 also decreases, thereby increasing the resonant frequency. Thus, although the resonant frequency is decreased when the IC tag 1 is attached to an object having a high permittivity, the resonant frequency is increased by reducing the dielectric layers 120. Hence, it is possible to make an adjustment so that the IC tag 1 is in a frequency band desired to be used.

As a result, since the IC tag 1 can easily adjust the resonant frequency by peeling off the resonant frequency adjuster 12 immediately before the IC tag 1 is used on an object, it is possible to easily match the resonant frequency to a frequency band desired to be used. That is, it is possible to easily adjust the IC tag 1 to a predetermined resonant frequency without designing the antenna according to an object to which the IC tag 1 is to be attached at the time of use.

In the present embodiment, the communication enhancer 103 may be provided on the IC tag main body 10 as needed. The communication enhancer 103 may be omitted from the IC tag 10 main body.

The communication enhancer 103 is made of a linear metal with a relatively narrow width arranged on the base film 101. In the case where the communication enhancer 103 is provided, as shown in Fig. 4A, it is preferable that the communication enhancer 103 be linearly arranged inside the space ranging from one of the bent space portions 1022 to the other bent space portion 1022, in the vicinity of the tips of the second linear portions 1021, 1021. That is, it is preferable that the communication enhancer 103 be arranged linearly from one of the second linear portions 1023 to the other second linear portion 1023 along the second linear portions 1023, 102. Although not shown, the communication enhancer 1023 may be layered on the IC tag main body 10, and further the resonant frequency adjuster 12 may be layered.

When the IC tag 1 is provided with the communication enhancer 103, a magnetic field is generated by electric current flowing to the resonating antenna 102. This magnetic field causes the electric current flows to the communication enhancer 103. Furthermore, a magnetic field is generated by the electric current flowing to the communication enhancer 103. The magnetic field generated from the communication enhancer 103 can change the electromagnetic state around the antenna 102 and change the resonant frequency.

### [Examples]

Hereinafter, examples that were made to clarify the effects of the present invention will be described. The present invention is not limited at all by the following examples.

### (Example 1)

First, the IC tag main body 10 similar to that shown in Figs. 2 to 4 was prepared. In the IC tag main body 10, the magnetic field type tag unit 105A was arranged on a minimum unit (thickness: 0.15 mm) composed of the base film 101, the antenna 102, the adhesive layer 107 and the cover film 104, and further the covering part 106 (thickness: 0.2 mm) made of silicone rubber was arranged.

One sheet of the resonant frequency adjuster (adhesive sheet) 12 (thickness: 0.15 mm) was formed by arranging the adhesive layer 121 (thickness: 0.025 mm) on one surface of the dielectric layer 120 (thickness: 0.125 mm) made of a resin film of polyethylene terephthalate (PET) that is dielectric (relative permittivity: 3.2). A layered product (thickness: 1.5 mm) of the resonant frequency adjusters 12 was made by sticking ten obtained adhesive sheets together.

Next, the obtained layered product of the resonant frequency adjusters 12 was attached to the IC tag main body 10 to obtain the IC tag 1 similar to that shown in Fig. 1. The entire thickness of the IC tag 1 was 1.85 mm.

Next, the resonant frequency adjusters 12 were peeled off one by one, and the resonant frequency was measured.

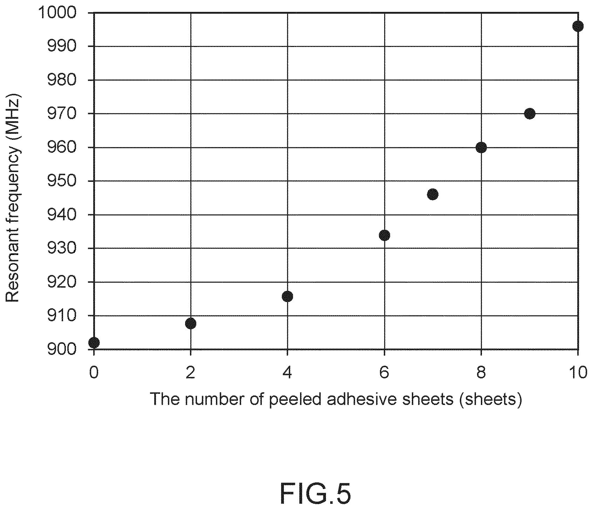

Fig. 5 shows the relationship between the number of the peeled resonant frequency adjusters 12 (sheets) and the resonant frequency (MHz).

As shown in Fig. 5, the resonant frequency was changed by peeling off the adhesive sheets. The resonant frequency was increased according to the number of the adhesive sheets peeled.

In the IC tag 1 used in the example, there was a change of 94 MHz in the resonant frequency by ten sheets of the resonant frequency adjusters 12 (dielectrics) depending on the presence or absence of the resonant frequency adjusters 12 on the IC tag main body 10 (the state in which the resonant frequency adjusters 12 were not peeled off and the state in which all the resonant frequency adjusters 12 were peeled off). Therefore, the IC tag 1 can correspond to the change in the resonant frequency within a range of 94 MHz. It can be understood that the resonant frequency of the IC tag can be adjusted step by step by adjusting the number of sheets to be peeled off.

Thus, since it is possible to adjust the resonant frequency, there is no need for the IC tag to change the design of the antenna. That is, immediately before attaching the IC tag, the resonant frequency can be adjusted by changing the number of layers of the resonant frequency adjusters, and the IC tag can be used by being attached to an object.

Here, as an example, tests were performed using the polyethylene terephthalate (PET) resin film as the dielectric for use in the dielectric layer, but a dielectric made of a substance having a higher permittivity may be used and attached in layers as the dielectric layers. Consequently, the amount of change in the resonant frequency per peeled resonant frequency adjuster can be made larger, and the range of change in the resonant frequency can be increased. Therefore, even if the permittivity of an object to which the IC tag is to be attached is high, it is possible to correspond to the object by adjusting the resonant frequency.

### List of Reference Signs

- 1: IC tag
- 10: IC tag main body
- 12: resonant frequency adjuster
- 101: base film
- 102: antenna
- 1021: first linear portion
- 1022: bent portion
- 1023: second linear portion
- 1024: bent space portion
- 1025: protruding portion
- 103: communication enhancer
- 104: cover film
- 105: tag unit
- 105A: magnetic field type tag unit
- 105B: wire type tag unit
- 1051: IC chip
- 1052: coil part
- 1053: conductor
- 1054: wire
- 1055: substrate
- 1056: die pad
- 1057: resin material
- 106: covering part
- 107: adhesive layer
- 120: dielectric layer
- 121: adhesive material layer

## Claims

1. An IC tag **characterized by** comprising:
an IC tag main body having an IC chip and an antenna electrically connected to the IC chip; and
a plurality of resonant frequency adjusters that are stacked in layers on the IC tag main body and adjust a resonant frequency of the antenna to be within a predetermined range.

2. The IC tag according to claim 1, **characterized in that** each of the resonant frequency adjusters has a dielectric layer.

3. The IC tag according to claim 2, **characterized in that** each of the resonant frequency adjusters has, on one surface or both surfaces of the dielectric layer, an adhesive material layer containing an adhesive material for detachably fixing the dielectric layer to the IC tag main body or to an adjacent dielectric layer.

4. The IC tag according to claim 3, **characterized in that** each of the resonant frequency adjusters has the dielectric layer stacked under the IC tag main body via the adhesive material layer.

5. The IC tag according to any one of claims 1 to 4, **characterized by** being configured to be able to change the resonant frequency by increasing or decreasing the number of the resonant frequency adjusters.

## Amended claims

### Amended claims under Art. 19.1 PCT

1. (Amended) An IC tag **characterizing by** comprising:
an IC tag main body having an IC chip and an antenna electrically connected to the IC chip; and
a plurality of resonant frequency adjusters that are stacked in layers on the IC tag main body and adjust a resonant frequency of the antenna to be within a predetermined range, wherein
the IC tag is configured to be able to change the resonant frequency by increasing or decreasing the number of the resonant frequency adjusters.

2. The IC tag according to claim 1, **characterized in that** each of the resonant frequency adjusters has a dielectric layer.

3. The IC tag according to claim 2, **characterized in that** each of the resonant frequency adjusters has, on one surface or both surfaces of the dielectric layer, an adhesive material layer containing an adhesive material for detachably fixing the dielectric layer to the IC tag main body or to an adjacent dielectric layer.

4. The IC tag according to claim 3, **characterized in that** each of the resonant frequency adjusters has the dielectric layer stacked under the IC tag main body via the adhesive material layer.

5. (Amended) The IC tag according to any one of claims 1 to 4, **characterized in that** the IC tag main body has a communication enhancer that changes the resonant frequency by changing an electromagnetic state of the antenna.
